# EUROPÄISCHE PATENTSCHRIFT

(11) **EP 3 654 086 B1**
(45) Veröffentlichungstag und Bekanntmachung des Hinweises auf die Patenterteilung: **28.04.2021**
(21) Anmeldenummer: 19208226.1
(22) Anmeldetag: 11.11.2019
(51) Int. Cl.: G02B 27/46, B29D 11/00, G01V 8/12, G01V 8/20, G02B 5/00

(54) **LICHTGITTER**
LIGHT GRID
GRILLE LUMINEUSE

(30) Priorität: 15.11.2018 DE 102018128669
(43) Veröffentlichungstag der Anmeldung: 20.05.2020
(73) Patentinhaber: SICK AG, 79183 Waldkirch (DE)
(72) Erfinder: EBLE, Johannes, 79183 Waldkirch (DE); OPFOLTER, Matthias, 79211 Denzlingen (DE)
(74) Vertreter: Manitz Finsterwald Patent- und Rechtsanwaltspartnerschaft mbB

(56) Entgegenhaltungen:
- WO-A1-03/069408
- WO-A1-2014/143234
- WO-A1-2019/215192
- US-A1- 2007 002 453

## Beschreibung

Die vorliegende Erfindung betrifft ein Lichtgitter mit wenigstens einem Lichtsender oder Lichtempfänger und wenigstens einem optischen System, das wenigstens ein Strahlablenkungselement, wenigstens ein Blendenelement und wenigstens eine Halterung zum Fixieren des Strahlablenkungselements und des Blendenelements in einer vorgegebenen Anordnung relativ zueinander umfasst.

Optische Systeme der genannten Art werden in vielfältiger Weise zur Beeinflussung der Ausbreitung von Licht eingesetzt, beispielsweise zum Fokussieren und Kollimieren von Lichtstrahlenbündeln. Das Blendenelement dient hierbei dazu, die Querschnittsfläche eines Lichtstrahlenbündels zu begrenzen. Optische Systeme mit Blendenelementen werden in unterschiedlichen Instrumenten verwendet, insbesondere in optoelektronischen Sensoren wie z. B. Lichttastern, Lichtschranken, Lichtgittern, Farbsensoren oder Scannern. Das Blendenelement weist im Allgemeinen einen Funktionsbereich auf, der sich hinsichtlich seiner optischen Eigenschaften von den umgebenden Bereichen unterscheidet. Beispielsweise kann ein Blendenelement ein zentrales Loch in einem intransparenten Körper oder einen reflektierenden Fleck auf einem transparenten Körper aufweisen.

Für eine akzeptable Leistungsfähigkeit des optischen Systems ist es wichtig, dass die vorgegebene Anordnung des Strahlablenkungselements relativ zum Blendenelement exakt eingehalten wird. Besonders bedeutsam ist eine exakte Ausrichtung der beiden genannten Elemente bei Lichtgittern und dergleichen, weil dies Mehrstrahlsensoren sind. Außerdem geht ein geringer Versatz der Blendenöffnung wegen des großen Lichtwegs mit einem spürbaren Strahlversatz einher. Weiterhin müssen Lichtgitter, insbesondere Reflex-Lichtgitter, Triangulations-Lichtgitter und "time of flight"-Lichtgitter (TOF-Lichtgitter), entweder kollimierte Senderstrahlenbündel oder einen kleinen Sichtbereich aufweisen. Wenn keine exakte Positionierung zwischen Blendenöffnungen und Strahlablenkungselementen vorliegt, sind die kollimierten Strahlenbündel relativ zueinander nicht ausgerichtet. Unter Umständen können sie sogar überlappen. Zum Beispiel eine zu messende Höhe eines Objekts kann dann nicht exakt angegeben werden, so dass die Leistungsfähigkeit des betreffenden Lichtgitters dementsprechend gering ist. Üblicherweise ist daher bei der Herstellung optischer Systeme ein Positionierungsschritt notwendig.

Das Positionieren von Strahlablenkungselementen und/oder Blendenelementen mittels manuellen Justierens ist zeitaufwändig und schwierig. Zudem ist der Aufbau von justierbaren Systemen im Allgemeinen komplex und voluminös. Bei Vielstrahlsystemen, die z. B. 100 und mehr Strahlenbündel aufweisen können, ist eine individuelle Positionierung kaum mit vertretbarem Aufwand durchführbar.

In der US 2007/0002453 A1 ist eine Kollimierungsvorrichtung für einen Flachbildschirm offenbart, die ein flächiges Substrat, ein darauf aufgebrachtes Linsenarray sowie eine gegenüberliegende Blendenanordnung umfasst. Die Blendenlöcher werden durch Laserabtragung erzeugt, wobei die Linsen des Linsenarrays das Laserlicht auf eine in der Brennebene angeordnete Absorptionsschicht fokussieren.

Die nachveröffentlichte WO 2019/215192 A1 offenbart einen Fingerabdrucksensor für ein Smartphone, der ein Mikrolinsenarray, eine zugehörige Blendenanordnung und einen zweidimensionalen lichtempfindlichen Sensor umfasst. Beim Herstellen der Blendenöffnungen wird ein lichtempfindliches Material auf die Rückseite des Mikrolinsenarrays aufgetragen und durch das Mikrolinsenarray hindurch belichtet. In der WO 03/069408 A1 ist ein Verfahren zur Herstellung eines Bildschirms offenbart, wobei der Bildschirm ein Substrat mit einer aufgebrachten lichtundurchlässigen Schicht sowie eingeformten Lentikularlinsen umfasst. Durch Bestrahlung der Linsenanordnung mit Laserlicht werden Öffnungen in der lichtundurchlässigen Schicht erzeugt.

Die WO 2014/143234 A1 offenbart ein tragbares spektroskopisches Messgerät, das einen Raumfilter zur Strahlformung aufweist. Zur Herstellung eines Pinholes im Brennpunkt einer Linse wird ein absorbierendes Element in der Brennebene angeordnet und ein durch die Linse fokussierter Laserstrahl dazu verwendet, ein Loch in dem absorbierenden Element zu erzeugen.

Es ist eine Aufgabe der Erfindung, ein schnell und einfach herstellbares Lichtgitter anzugeben.

Die Lösung der Aufgabe erfolgt durch ein Lichtgitter mit den Merkmalen des Anspruchs 1.

Erfindungsgemäß ist das optische System unter Einsatz eines Verfahrens hergestellt, bei dem
(i) das Strahlablenkungselement und ein Abschirmungselement bereitgestellt werden,
(ii) das Strahlablenkungselement und das Abschirmungselement mittels der Halterung derart fixiert werden, dass die tatsächliche Anordnung des Abschirmungselements relativ zum Strahlablenkungselement der vorgegebenen Anordnung des Blendenelements relativ zum Strahlablenkungselement entspricht, und
(iii) das Abschirmungselement mittels Bearbeitungslichtstrahlen bearbeitet wird, um das Blendenelement zu bilden, wobei
(iv) das Strahlablenkungselement derart mit den Bearbeitungslichtstrahlen bestrahlt wird, dass die Bearbeitungslichtstrahlen nach einer Ablenkung durch das Strahlablenkungselement auf einen Funktionsbereich des Abschirmungselements auftreffen und dessen optische Eigenschaften durch Energieabgabe verändern.

Ein erfindungsgemäßes Lichtgitter weist dementsprechend diejenigen Vorrichtungsmerkmale auf, die sich aus den vorstehend angegebenen Verfahrensschritten ergeben.

Erfindungsgemäß wird das Blendenelement also nicht als fertiges Bauelement bereitgestellt und relativ zum Strahlablenkungselement ausgerichtet, sondern es wird eine Vorstufe in Form des Abschirmungselements gemeinsam mit dem Strahlablenkungselement in der gewünschten Stellung fixiert und erst im fixierten Zustand fertigbearbeitet. Der Funktionsbereich, also zum Beispiel das Blendenloch, wird hierbei gerade dort erzeugt, wo das fixierte Strahlablenkungselement die Bearbeitungslichtstrahlen hinlenkt. Beim Betrieb eines solchermaßen hergestellten optischen Systems ist somit der Funktionsbereich exakt auf das Strahlablenkungselement abgestimmt. Vorzugsweise wird die Fixierung nach der Herstellung des optischen Systems nicht mehr gelöst. Das bedeutet, dass der Strahlengang bei der Herstellung und beim Betrieb praktisch identisch ist. Eine nachträgliche Positionierung des Blendenelements oder des Strahlablenkungselements ist somit nicht erforderlich.

Beim Fixieren des Strahlablenkungselements und des Abschirmungselements im Schritt (ii) ist nicht notwendigerweise eine exakte Positionierung des Abschirmungselements quer zur optischen Achse des Strahlablenkungselements erforderlich, da die für die Funktion des optischen Systems maßgebliche Blendenöffnung überhaupt erst in Schritt (iv) vorbereitet bzw. erzeugt wird. Es ist jedoch wünschenswert, dass das Abschirmungselement bezüglich seiner Lage auf der optischen Achse des Strahlablenkungselements relativ exakt positioniert ist. Eine solche Beschränkung auf die exakte axiale Positionierung ermöglicht eine besonders einfache Herstellung.

Die in Schritt (ii) genannte Entsprechung der tatsächlichen Anordnung des Blendenelementes und des Abschirmelementes jeweils relativ zum Strahlablenkungselement beinhaltet also eine möglichst genaue, bevorzugt exakte, axiale Entsprechung und nur vorzugsweise auch eine möglichst genaue, bevorzugt exakte, Entsprechung der lateralen Anordnung, jeweils im Rahmen der Fabrikationsgenauigkeit.

Vorzugsweise wird im Schritt (i) als Strahlablenkungselement eine Sammeloptik bereitgestellt. Eine Sammeloptik, also beispielsweise eine Sammellinse oder ein Objektiv, fokussiert die Bearbeitungslichtstrahlen auf einen relativ kleinen Fleck und erzeugt somit eine hohe lokale Strahlungsintensität, welche das Verändern der optischen Eigenschaften des Funktionsbereichs erleichtert.

Um für kollimierte Sende- und/oder Empfangsstrahlenbündel oder für einen kleinen Sichtbereich zu sorgen, kann insbesondere ein Blendenelement mit einem Blendendurchmesser von etwa 50 µm bis etwa 200 µm und/oder eine Sammellinse mit einer Brennweite von etwa 10 mm vorgesehen sein.

Insbesondere können im Schritt (ii) das Strahlablenkungselement und das Abschirmungselement mittels der Halterung derart fixiert werden, dass das Abschirmungselement zumindest näherungsweise in einer Brennebene der Sammeloptik angeordnet ist. Bei Einstrahlen eines Parallelbündels von Bearbeitungslichtstrahlen auf die Sammeloptik wird bei dieser Ausgestaltung ein besonders kleiner, nämlich im Wesentlichen auf den von der Sammeloptik erzeugten Brennfleck beschränkter Funktionsbereich erzeugt. Es hat sich gezeigt, dass auf diese Weise Blendenelemente gebildet werden können, die Blendenöffnungen oder Punktblenden von 0,5 mm Durchmesser oder weniger aufweisen.

Vorzugsweise wird mit einem hier offenbarten Verfahren eine Blendenöffnung erzeugt, deren Durchmesser mindestens 5 µm und höchstens 1 mm, besonders bevorzugt mindestens 20 µm und höchstens 200 µm, beträgt. Grundsätzlich sind jedoch je nach Anwendung kleinere und größere Durchmesser möglich.

Die durch den Funktionsbereich gegebene Blendenform kann insbesondere kreisrund, elliptisch, rechteckig, kreuzförmig oder ringförmig sein. Weiterhin kann das Blendenelement aus mehreren Einzelblenden zusammengesetzt sein.

Die Geometrie des Funktionsbereichs, insbesondere der Blendenöffnung, kann bei Bedarf verändert werden, insbesondere durch eine Ortsveränderung der Bearbeitungslichtstrahlen, durch eine Winkeländerung der Bearbeitungslichtstrahlen und/oder durch eine Veränderung der Fokussierung der Bearbeitungslichtstrahlen, beispielsweise mittels eines Bearbeitungslasers, der eine variable Fokussiereinheit aufweist.

Im Schritt (i) wird als Strahlablenkungselement ein Linsenarray, eine Kombination eines Linsenarrays und einer Linse oder eine Kombination eines Linsenarrays und einer Spiegeloptik bereitgestellt. Insbesondere kann eine Linse oder ein Linsenarray aus Kunststoff, beispielsweise aus Polymethylmethacrylat (PMMA) oder aus einem Polycarbonat (PC), bereitgestellt werden. Vorteilhaft ist die Verwendung eines Kunststoffes mit geringer interner Absorption (geringe Volumenabsorption). Prinzipiell kommt auch eine Linse aus Glas in Betracht. Als Spiegeloptik kann insbesondere ein goldbeschichtetes Kunststoffteil bereitgestellt werden. Es kann ferner eine Linse oder ein Linsenarray mit einer darauf aufgebrachten antireflektierenden Schicht bereitgestellt werden. Die antireflektierende Schicht kann hinsichtlich der Bearbeitungslichtstrahlen und/oder hinsichtlich der für den bestimmungsgemäßen Betrieb des optischen Systems vorgesehenen Lichtstrahlen optimiert sein.

Vorzugsweise werden im Schritt (ii) das Strahlablenkungselement und das Abschirmungselement mittels der, vorzugsweise einteiligen, Halterung derart fixiert, dass sich eine feste Verbindung zwischen dem Strahlablenkungselement und dem Abschirmungselement ergibt. Die feste Verbindung kann für eine dauerhafte Fixierung ausgelegt sein. Das Strahlablenkungselement und das Abschirmungselement können aufgrund der festen Verbindung relativ zueinander unbeweglich sein und/oder unlösbar miteinander gekoppelt sein.

Da die Halterung nicht zwingend für eine Justiermöglichkeit ausgelegt sein muss, kann sie besonders einfach gestaltet sein. Insbesondere kann ein rohrförmiges, rohrbündelförmiges, profilartiges oder gitterartiges Bauteil aus Kunststoff oder Metall als Halterung bereitgestellt werden. Die Halterung kann zusätzlich vorteilhafte optische Eigenschaften aufweisen. Zum Beispiel kann die Halterung eine Oberfläche mit geringer Remission aufweisen.

Im Schritt (i) kann ein einstückiges Bauteil, vorzugsweise aus Kunststoff oder Metall, bereitgestellt werden, an dem das Abschirmungselement und die Halterung als Abschnitte ausgebildet sind. Dies ermöglicht eine besonders einfache Konstruktion, bei der das Abschirmungselement nicht eigens in der Halterung montiert werden muss, sondern von Haus aus an dieser gehalten ist.

Im Schritt (ii) können das Strahlablenkungselement und das Abschirmungselement mittels der Halterung derart fixiert werden, dass das Strahlablenkungselement und das Blendenelement bezüglich einer optischen Achse koaxial angeordnet sind. Das heißt, es kann ein optisches System hergestellt werden, bei dem sich der Funktionsbereich, z. B. die Blendenöffnung, des Blendenelements auf der optischen Achse des Strahlablenkungselements befindet. Solche optischen Systeme werden in vielen Geräten und Instrumenten, insbesondere in optoelektronischen Sensoren, verbaut. Sollte es die Anwendung erfordern, können das Strahlablenkungselement und das Abschirmungselement und insofern auch das zu bildende Blendenelement jedoch auch versetzt oder gekippt angeordnet sein.

Bevorzugt werden die Bearbeitungslichtstrahlen durch ein Lasersystem erzeugt. Mit einem Lasersystem kann auf verschiedene Arten eine Materialveränderung am Abschirmungselement vorgenommen werden, wie dies auf dem Gebiet der Materialbearbeitung grundsätzlich bekannt ist. Als vorteilhaft hat sich insbesondere die Methode der Laserablation herausgestellt.

Es kann insbesondere ein Lasersystem verwendet werden, das einen Festkörperlaser umfasst.

Bevorzugt umfasst das Lasersystem einen Pikosekundenlaser oder einen Femtosekundenlaser.

Im Schritt (i) können mehrere separate Strahlablenkungselemente bereitgestellt werden, die im Schritt (ii) mittels einer gemeinsamen Halterung fixiert werden. Dies ermöglicht eine vereinfachte Herstellung mehrstrahliger optischer Systeme, wie sie zum Beispiel für Mehrstrahlsensoren wie tastende Lichtgitter oder Reflex-lichtgitter benötigt werden. Aufgrund der Fixierung in der gemeinsamen Halterung sind beim Betrieb eines entsprechenden Sensors alle Strahlenbündel in korrekter Weise relativ zueinander ausgerichtet. Die Strahlablenkungselemente können insbesondere derart fixiert werden, dass nach dem Bilden der Blendenelemente die jeweiligen optischen Achsen parallel zueinander sind. Ferner können im Schritt (i) mehrere Strahlablenkungselemente bereitgestellt werden, die in eine gemeinsame Strahlablenkungskomponente integriert sind. Zum Beispiel kann ein Linsenarray mit mehreren parallelen Linsen bereitgestellt werden.

Mittels der Anordnung aus mehreren fixierten Strahlablenkungselementen kann ein Blendenelement mit mehreren Funktionsbereichen, also zum Beispiel ein Blendenelement mit mehreren Blendenlöchern, gebildet werden. Hierfür können die Strahlablenkungselemente gleichzeitig oder nacheinander mit den Bearbeitungslichtstrahlen bestrahlt werden. Insbesondere kann für ein sequenzielles Bestrahlen die Halterung mit den Strahlablenkungselementen und dem Abschirmungselement mittels eines Verfahrtisches relativ zu einer Bearbeitungslichtquelle verschoben werden oder es kann eine verfahrbare Bearbeitungslichtquelle verwendet werden. Es kann jedoch auch ein gleichzeitiges Bestrahlen aller Funktionsbereiche erfolgen und hierfür eine Strahlaufteilung vorgesehen sein.

Vorzugsweise wird im Schritt (i) ein zumindest im Wesentlichen intransparentes Ausgangselement bereitgestellt, wobei im Schritt (iv) durch die abgelenkten Bearbeitungslichtstrahlen eine Transparenz oder Teiltransparenz in dem Funktionsbereich erzeugt wird. Der transparente oder teiltransparente Funktionsbereich bildet eine Blendenöffnung des Blendenelements.

Im Schritt (iv) kann die Transparenz oder Teiltransparenz durch Abtragen von Material mittels der Bearbeitungslichtstrahlen erzeugt werden. Das heißt es kann intransparentes Material durch Energieabgabe von dem Abschirmungselement entfernt werden. Dies ist beispielsweise mit Festkörperlasersystemen relativ einfach zu bewerkstelligen.

Insbesondere kann im Schritt (iv) die Transparenz oder Teiltransparenz durch Laserschneiden und/oder Laserbohren einer Durchbrechung in dem Abschirmungselement erzeugt werden. Auf diese Weise kann eine Lochblende, Schlitzblende oder dergleichen hergestellt werden, wie sie in zahlreichen optischen Geräten benötigt wird.

Eine Ausführungsform der Erfindung sieht vor, dass im Schritt (i) als Abschirmungselement ein zumindest im Wesentlichen transparenter Träger mit einer aufgebrachten intransparenten Schicht, insbesondere Metallschicht, bereitgestellt wird und im Schritt (iv) die Transparenz oder Teiltransparenz durch wenigstens teilweises Abtragen der intransparenten Schicht erzeugt wird. Die intransparente Schicht kann hierbei als aufgedampfte Dünnschicht ausgeführt sein, so dass relativ wenig Energieabgabe zum Abtragen notwendig ist. Insbesondere kann ein plattenförmiger Träger aus Glas oder Kunststoff mit einer aufgedampften Chromschicht als Abschirmungselement bereitgestellt werden.

Besonders bevorzugt wird als Abschirmungselement ein Glassubstrat mit einer aufgebrachten absorbierenden Schicht, insbesondere einer Schwarzchromschicht, einer Schwarztitanschicht oder einer Titanaluminiumnitrid-Schicht, bereitgestellt. Die Schichtdicke beträgt bevorzugt mindestens etwa 20 nm und höchstens etwa 2000 nm, besonders bevorzugt mindestens etwa 100 nm und höchstens etwa 500 nm. Dies gewährleistet einerseits ein ausreichendes Blockieren des Lichts und begünstigt, insbesondere bei Verwendung eines Laserablationsprozesses, andererseits eine Ablation des Materials mittels Laserstrahlung. Vorzugsweise befindet sich die intransparente Schicht auf einer dem Strahlablenkungselement zugewandten Seite des Abschirmungselements.

Es kann vorgesehen sein, dass im Schritt (i) als Abschirmungselement ein zumindest im Wesentlichen transparenter Träger mit einer aufgebrachten Fotolackschicht bereitgestellt wird und im Schritt (iv) die Transparenz oder Teiltransparenz durch Aktivieren der Fotolackschicht und anschließende Entfernung der aktivierten Fotolackschicht mittels einer Lösungsmittelbehandlung erzeugt wird.

Eine weitere Ausführungsform der Erfindung sieht vor, dass im Schritt (i) als Abschirmungselement ein fotografischer Film bereitgestellt wird und im Schritt (iv) die Transparenz oder Teiltransparenz durch Belichtung des fotografischen Films und gegebenenfalls anschließende Entwicklung des fotografischen Films erzeugt wird. Bevorzugt wird ein fotografischer Positivfilm bereitgestellt. In diesem Fall sind keine Nassprozesse erforderlich, sodass nur ein geringer Aufwand zum Bilden des Blendenelements erforderlich ist.

Generell und auch in dieser Ausgestaltung ermöglicht die Erfindung vorteilhafterweise die Realisierung sehr dünner Blenden.

Gemäß einer speziellen Ausgestaltung wird im Schritt (iii) das Bearbeiten des Abschirmungselements durch eine Bilderfassungseinrichtung überwacht. Insbesondere kann eine an ein Bildverarbeitungssystem angeschlossene Kamera den Bereich des Abschirmungselements aufnehmen, in welchem die Blende gebildet wird. Die Aufnahme kann ausgewertet werden, um bei Bedarf die Bearbeitung, insbesondere die Leistung und/oder die Belichtungszeit, zu steuern. Auf diese Weise können die Zuverlässigkeit und Genauigkeit des Verfahrens weiter gesteigert werden.

Zum Herstellen des Lichtgitters kann das entsprechend hergestellte optische System mit dem Lichtsender oder Lichtempfänger sowie einer elektronischen Steuereinrichtung in einem Sensorgehäuse montiert werden.

Gemäß einer Ausgestaltung der Erfindung wird das Bearbeiten des Abschirmungselements in einem teil- oder vollverbauten Zustand des optoelektronischen Sensors durchgeführt. Beispielsweise kann die Anordnung aus Strahlablenkungselement, Abschirmungselement und Halterung als vorgefertigtes Optikmodul bereitgestellt und an einer den Lichtsender oder Lichtempfänger umfassenden Elektronikkarte befestigt werden. Die Elektronikkarte mit dem Optikmodul kann in einem Sensorgehäuse verbaut werden, bevor das Abschirmungselement bearbeitet wird, um das Blendenelement zu bilden. Dies ermöglicht eine besonders effiziente Fertigung. Von besonderem Vorteil ist die automatische Eliminierung von Toleranzen der Elektronikkarte und des Sensorgehäuses bei der Blendenerzeugung.

Es kann vorgesehen sein, dass der Lichtsender oder Lichtempfänger während des Bearbeitens des Abschirmungselements durch ein Schutzelement abgeschirmt wird und das Schutzelement entfernt wird, wenn das Bilden des Blendenelements abgeschlossen ist. Dies ermöglicht den Einsatz von Bearbeitungslicht hoher Leistung, ohne eine Beschädigung elektronischer Bauteile befürchten zu müssen.

Vorzugsweise wird der Lichtsender oder Lichtempfänger, oder ein mit dem Lichtsender oder Lichtempfänger verbundener Lichtleiter, unmittelbar am Funktionsbereich des Abschirmungselements angeordnet. Vorzugsweise erfolgt die Montage also derart, dass sich eine Blendenöffnung des Blendenelements direkt an der Lichtquelle oder an der Empfangsfläche befindet.

Bei einem erfindungsgemäßen Lichtgitter kann es sich um ein Lichtgitter handeln, das als Sender-Empfänger-System ausgeführt ist und demgemäß wenigstens einen Lichtsender und wenigstens einen Lichtempfänger in jeweiligen getrennten Gehäusen umfasst. Ein erfindungsgemäßes Lichtgitter kann jedoch auch als Reflex-Lichtgitter ausgeführt sein, das ein Gehäuse mit Lichtsender und Lichtempfänger sowie einen passiven Reflektor umfasst, oder als ein tastendes Triangulations-Lichtgitter, welche wenigstens einen Lichtsender und wenigstens einen Lichtempfänger in einem Gehäuse aufweist und für eine direkte Detektion eines Objekts ausgelegt ist. Weiterhin kann ein erfindungsgemäßes Lichtgitter als TOF-Lichtgitter ("time of flight"-Lichtgitter) ausgeführt sein, das wenigstens einen Lichtsender sowie wenigstens einen Lichtempfänger in einem Gehäuse aufweist und für eine direkte Detektion eines Objekts mittels einer Laufzeitmessung ausgelegt ist. Vorzugsweise umfasst ein erfindungsgemäßes Lichtgitter wenigstens einen Lichtsender und wenigstens einen Lichtempfänger in einem gemeinsamen Gehäuse. Besonders bevorzugt ist ein erfindungsgemäßes Lichtgitter als Reflex-Lichtgitter oder als tastendes Lichtgitter ausgebildet.

Weiterbildungen der Erfindung sind auch in den abhängigen Ansprüchen, der Beschreibung sowie der beigefügten Zeichnung angegeben.

Die Erfindung wird nachfolgend beispielhaft anhand der Zeichnung beschrieben. Die Darstellungen in den Figuren sind nicht als maßstabsgetreu zu verstehen.
- Fig. 1: ist eine Prinzipdarstellung einer Anordnung zur erfindungsgemäßen Herstellung eines optischen Systems.
- Fig.2: zeigt ein optisches System, das durch ein erfindungsgemäßes Verfahren hergestellt ist.
- Fig.3: zeigt eine erste Ausführungsform eines erfindungsgemäßen optoelektronischen Sensors, der durch ein erfindungsgemäßes Verfahren hergestellt ist.
- Fig.4: zeigt eine zweite Ausführungsform eines erfindungsgemäßen optoelektronischen Sensors, der durch ein erfindungsgemäßes Verfahren hergestellt ist.
- Fig.5: zeigt eine dritte Ausführungsform eines erfindungsgemäßen optoelektronischen Sensors, der durch ein erfindungsgemäßes Verfahren hergestellt ist, in einer Vorderansicht.
- Fig.6: zeigt den optoelektronischen Sensor gemäß Fig. 5 in einer Seitenansicht.
- Fig.7: zeigt einen gemäß dem Stand der Technik hergestellten optoelektronischen Sensor in einer Seitenansicht.
- Fig.8: zeigt eine Vorrichtung, die zum Durchführen eines erfindungsgemäßen Verfahrens zum Herstellen eines optischen Systems ausgebildet ist.
- Fig.9: zeigt eine vierte Ausführungsform eines erfindungsgemäßen optoelektronischen Sensors, der durch ein erfindungsgemäßes Verfahren hergestellt ist.

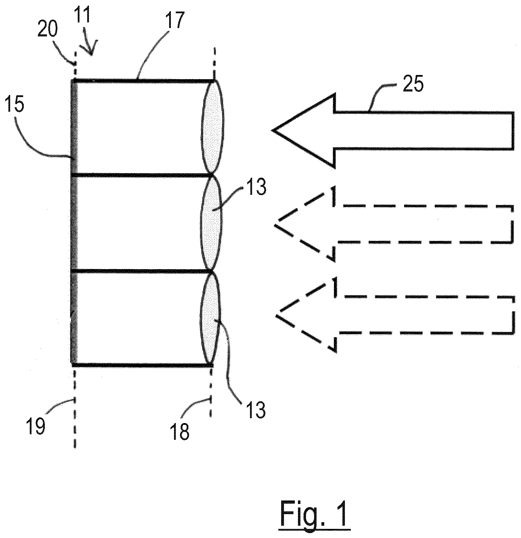

Fig. 1 zeigt ein Optikmodul 11, das eine Anordnung von Linsen 13 und ein Abschirmungselement 15 in Form einer intransparenten Platte umfasst. Die Anordnung von Linsen 13 und das Abschirmungselement 15 sind mittels einer Halterung 17 in einer vorgegebenen Anordnung relativ zueinander fixiert. Bei dem dargestellten Ausführungsbeispiel ist die Anordnung derart, dass die Linsen 13 zumindest im Wesentlichen in einer gemeinsamen Linsenebene 18 angeordnet sind und eine Plattenebene 19 des Abschirmungselements 15 parallel zu der Linsenebene 18 verläuft. Die Linsen 13 und das Abschirmungselement 15 können in die Halterung 17 eingeklebt und/oder eingeklemmt sein. Vorzugsweise handelt es sich bei der Halterung 17 um ein einfaches Bauteil aus Kunststoff oder Metall. Wie gezeigt sind die Linsen 13 als Sammellinsen ausgebildet, die jeweils eine Brennebene 20 aufweisen. Die Plattenebene 19 fällt mit den Brennebenen 20 zusammen. Im Prinzip könnten die Linsen 13 auch unterschiedliche Brennweiten 20 aufweisen.

Eine Ausführungsform eines erfindungsgemäßen Verfahrens zum Herstellen eines optischen Systems sieht nach einer Bereitstellung des in Fig. 1 gezeigten Optikmoduls 11 vor, dass ein Bündel 25 von zumindest im Wesentlichen parallelen Bearbeitungslichtstrahlen von der dem Abschirmungselement 15 abgewandten Seite des Optikmoduls 11 aus auf eine der Linsen 13 gerichtet wird. Vorzugsweise wird ein nicht gezeigtes Lasersystem dazu verwendet, das Bündel 25 von Bearbeitungslichtstrahlen zu erzeugen.

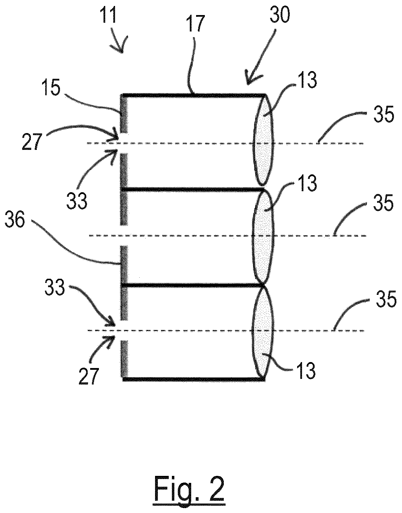

Die Linse 13 fokussiert die Bearbeitungslichtstrahlen auf einen Brennfleck. Der Brennfleck befindet sich auf dem Abschirmungselement 15 und weist eine hohe Strahlungsintensität auf. Insbesondere wird die Strahlungsleistung der Bearbeitungslichtstrahlen so hoch gewählt, dass im Bereich des Brennflecks ein Materialabtrag erfolgt. Die Bestrahlung wird so durchgeführt, dass wie in Fig. 2 erkennbar eine Durchbrechung 27 in dem Abschirmungselement 15 erzeugt wird, dessen Größe in etwa der Größe des Brennflecks entspricht. Nach Fertigstellung der Durchbrechung 27 wird das Lasersystem relativ zum Optikmodul 11 so bewegt, dass das Bündel 25 von Bearbeitungslichtstrahlen auf eine andere Linse 13 einfällt. Auf diese Weise wird unter Verwendung jeder der Linsen 13 jeweils eine Durchbrechung 27 erzeugt und dadurch das in Fig. 2 dargestellte optische System 30 hergestellt. Die Durchbrechungen 27 bilden Funktionsbereiche - und zwar bei dem gezeigten Ausführungsbeispiel Blendenöffnungen 33. Diese befinden sich jeweils auf den optischen Achsen 35 der Linsen 13. Das heißt aus dem Abschirmungselement 15 wird ein Blendenelement 36 mit mehreren Blendenöffnungen 33 gebildet. Grundsätzlich kann die Erzeugung der Blendenöffnungen 33 bei einer Aufteilung der Bearbeitungslichtstrahlen auch synchron erfolgen.

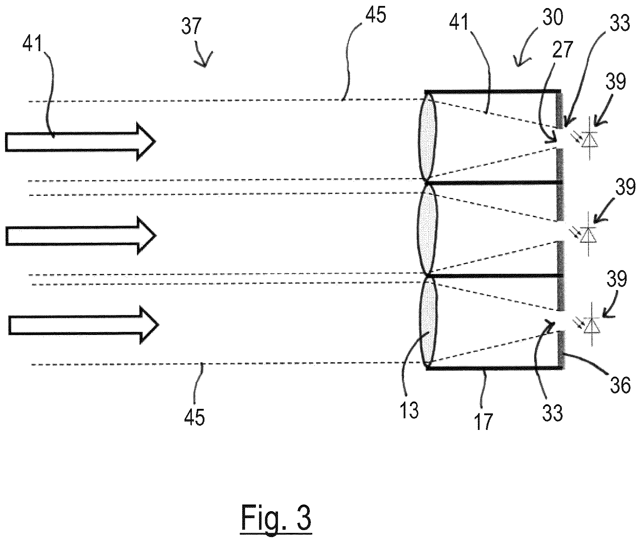

Fig. 3 zeigt schematisch einen optoelektronischen Sensor 37, in welchen das in Fig. 2 dargestellte optische System 30 eingebaut ist. Der optoelektronische Sensor 37 weist eine Anordnung von Lichtempfängern 39 zum Empfangen von Empfangslichtstrahlen 41 auf. Die Lichtempfänger 39 können als einfache Fotodioden oder als ortsauflösende Detektoren ausgebildet sein. Vorzugsweise sind die Lichtempfänger 39 auf eine nicht gezeigte Elektronikkarte aufgebracht, die gemeinsam mit dem optischen System 30 in einem ebenfalls nicht dargestellten Sensorgehäuse des optoelektronischen Sensors 37 untergebracht ist. Wie gezeigt befinden sich die Lichtempfänger 39 jeweils unmittelbar vor den Blendenöffnungen 33. Vorzugsweise sind die lichtempfindlichen Flächen der Lichtempfänger 39 jeweils größer als die zugehörige Blendenöffnung 33. Dadurch werden Toleranzen der Elektronikkarte und Temperatureffekte, die sich auf die Bauteillage auswirken, ausgeglichen. Die Empfangslichtbereiche 45 der Lichtempfänger 39 sind relativ zueinander exakt ausgerichtet. Es ist im Übrigen nicht notwendig, die Bündel 25 (Fig. 1) von Bearbeitungslichtstrahlen mit maximaler Genauigkeit auszurichten, weil die Ortsauflösung über die Lichtempfänger 39 erfolgt.

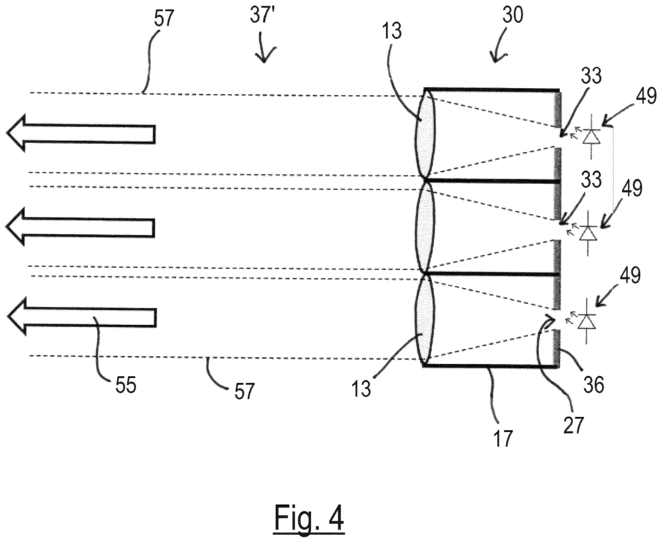

In Fig. 4 ist die Sendeanordnung eines alternativ gestalteten optoelektronischen Sensors 37' gezeigt, in welchen das in Fig. 2 dargestellte optische System 30 eingebaut ist. Der in Fig. 4 dargestellte optoelektronische Sensor 37' weist anstatt einer Anordnung von Lichtempfängern eine Anordnung von Lichtsendern 49 zum Aussenden von Sendelichtstrahlen 55 auf. Die Lichtsender 49 können als Leuchtdioden oder Laserdioden ausgeführt sein. Vorzugsweise sind die Lichtsender 49 auf eine Elektronikkarte aufgebracht, die gemeinsam mit dem optischen System 30 in einem Sensorgehäuse des optoelektronischen Sensors 37' untergebracht ist. Wie gezeigt befinden sich die Lichtsender 49 jeweils unmittelbar an den Blendenöffnungen 33. Die Linsen 13 kollimieren die Sendelichtstrahlen 55 zu Parallelstrahlenbündeln 57, die relativ zueinander exakt ausgerichtet sind.

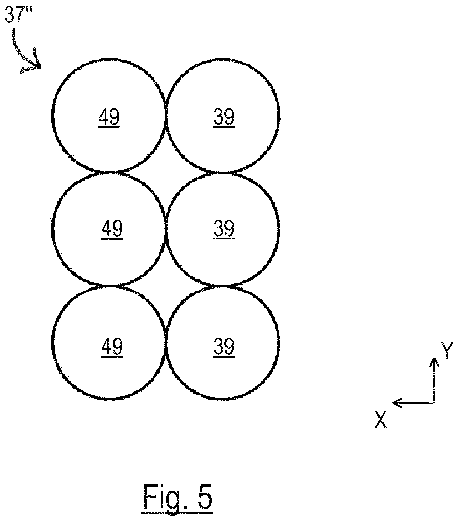

Es versteht sich, dass es eine Vielzahl von weiteren Anwendungsmöglichkeiten ausgerichteter Empfangslichtbereiche 45 (Fig. 3) und ausgerichteter Parallelstrahlenbündel 57 von Sendestrahlen 55 (Fig. 4) gibt. Gegenstand der Fig. 5 ist ein weiterer erfindungsgemäß gestalteter optoelektronischer Sensor 37". Gezeigt ist in Fig. 5 die Draufsicht auf die kombiniert angeordneten Lichtsender 49 und Lichtempfänger 39. Dieser optoelektronische Sensor 37" ist als Reflex-Lichtgitter oder tastendes Lichtgitter ausgeführt und weist eine Anordnung von Lichtsendern 49 sowie eine daneben befindliche Anordnung von Lichtempfängern 39 auf. Die Lichtsender 49 und die Lichtempfänger 39 sind bevorzugt in einem nicht dargestellten Sensorgehäuse untergebracht. Die Lichtempfänger 39 empfangen das von den Lichtsendern 49 ausgesendete Licht, nachdem es von einem Reflektor oder von einem Objekt reflektiert worden ist.

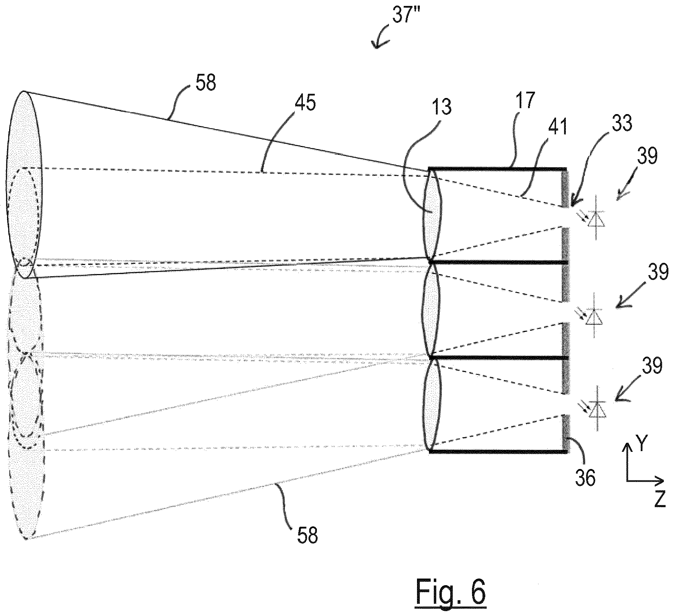

Wie in der Seitenansicht gemäß Fig. 6 zu erkennen ist, sind die Empfangslichtbereiche 45 aufgrund der exakt positionierten Blendenöffnungen 33 exakt ausgerichtet. Die Leistungsfähigkeit des optoelektronischen Sensors 37" ist daher selbst dann ausreichend hoch, wenn die Sendestrahlenbündel 58 wie dargestellt in einem gewissen Ausmaß relativ zueinander schielen (Die zugehörigen Lichtsender 49 sind in Fig. 6 nicht gezeigt). Das heißt die Anforderungen an die Positioniergenauigkeit können auf der Senderseite reduziert werden, um so Kosten zu sparen. Unter Umständen kann auf der Senderseite ein konventionelles Herstellungsverfahren eingesetzt werden. Ein Vorteil gegenüber einer Ausführungsform, bei der auf der Senderseite ein erfindungsgemäßes Herstellungsverfahren und auf der Empfängerseite ein konventionelles Herstellungsverfahren eingesetzt wird, besteht darin, dass der Energieverlust nur gering ist.

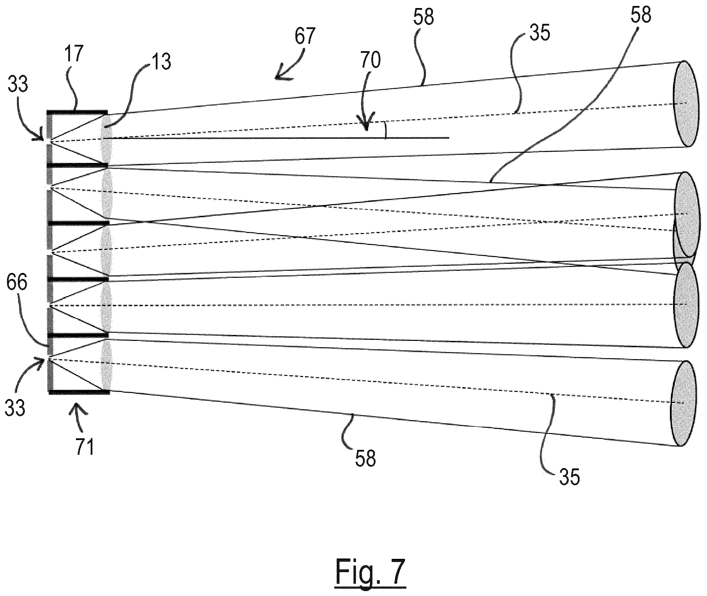

Ein optoelektronischer Sensor 67 mit einem in herkömmlicher Weise hergestellten Optikmodul 71 ist in Fig. 7 dargestellt. Die Blendenelemente 66 und die Linsen 13 sind hier als separat gefertigte Spritzgussbauteile ausgeführt. Aufgrund von Positionstoleranzen kommt es ohne Justage zu einem Schielen der optischen Achsen 35 relativ zueinander, wie durch den Schielwinkel 70 angegeben ist. Die Sendestrahlenbündel 58 können sich sogar kreuzen. Auch absolut gesehen, also auf das nicht gezeigte Sensorgehäuse bezogen, kommt es zu einem unerwünschten Schielen. Typische laterale Positionstoleranzen zwischen den Linsen 13 und den Blendenöffnungen 33 betragen ±0,1 mm oder mehr. Bei einer typischen Brennweite von 10 mm führt dies zu einem Schielwinkel von ±0,6°. In einem Abstand von etwa 1 m vom herkömmlichen optoelektronischen Sensor 67 treten in diesem Fall Verschiebungen der Lichtflecke von ±10 mm auf, was mit einer spürbaren Leistungsbeeinträchtigung des optoelektronischen Sensors 67 einhergeht.

Eine nicht dargestellte Ausführungsform der Erfindung sieht eine Autokollimationsanordnung vor, bei der Lichtsender und Lichtempfänger koaxial angeordnet sind.

Da bei der Herstellung die Linsen 13 über die Halterung 17 fest mit dem späteren Blendenelement 36 verbunden sind und das zur Bearbeitung vorgesehene Lasersystem mit hoher Genauigkeit relativ zum Optikmodul 11 ausgerichtet werden kann, sind bei einem erfindungsgemäß hergestellten optischen System 30 die Blendenöffnungen 33 und die Linsen 13 präzise zueinander ausgerichtet. Insbesondere haben Positions- und Formtoleranzen der Linsen 13 kaum eine Auswirkung auf die Leistungsfähigkeit des betreffenden optoelektronischen Sensors 37, 37', 37". Die Mittelpunkte der Blendenöffnungen 33 liegen stets relativ exakt auf den optischen Achsen 35 (Fig. 2). Werden mehrere Optikmodule 11 relativ zueinander im Sensorgehäuse positioniert, so können Empfangslichtbereiche 45 und ausgesendete Parallelstrahlenbündel 57 exakt zueinander ausgerichtet werden. Die Leistungsfähigkeit eines optoelektronischen Sensors 37, 37', 37", insbesondere in Bezug auf Reichweite, Umspiegelungssicherheit und Simultanscan-Fähigkeit, kann hierdurch beträchtlich gesteigert werden.

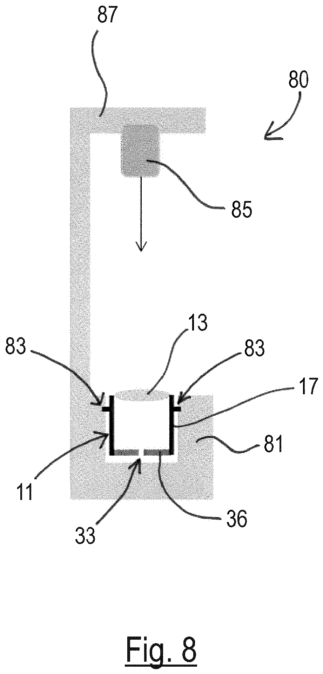

Fig. 8 zeigt eine Vorrichtung 80, mit welcher ein erfindungsgemäßes Verfahren durchgeführt werden kann. Die Vorrichtung 80 umfasst eine Modulaufnahme 81, in welcher ein Optikmodul 11 unter Verwendung von Modulausrichtungselementen 83 fixiert ist. Die Modulausrichtungselemente 83 sind wie dargestellt an einer Au-βenseite der Halterung 17 des Optikmoduls 11 angeordnet. Sie können zum Beispiel zur mechanischen Ausrichtung mit entsprechenden Justierschrauben ausgestaltet sein. Ein Bearbeitungslaser 85 ist mittels eines Positioniersystems 87 in Bezug auf die Modulaufnahme 81 positionierbar. Zur Bildung eines Blendenelements 36 wird der Bearbeitungslaser 85 in gewünschter Weise ausgerichtet und aktiviert, bis der durch die Linse 13 fokussierte Laserstrahl eine Blendenöffnung 33 erzeugt hat.

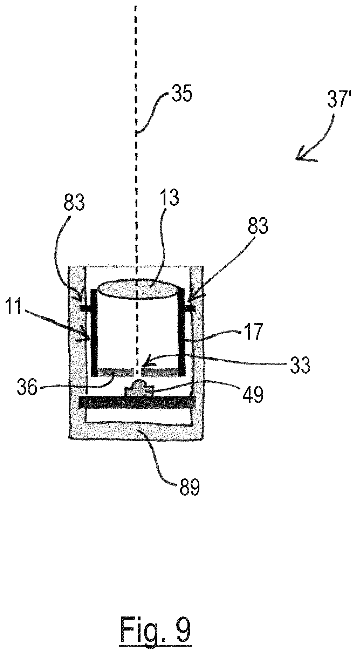

Wie in Fig. 9 erkennbar wird das fertige Optikmodul 11 vorzugsweise auf die gleiche Weise unter Verwendung der Modulausrichtungselemente 83 in einem Sensorgehäuse 89 fixiert wie zuvor in der Modulaufnahme 81 (Fig. 8). Dadurch ist eine exakte Ausrichtung der Linse 13, der Blendenöffnung 33 und des Sensorgehäuses 89 relativ zueinander sichergestellt. Vorteilhaft ist es dazu, wenn das Sensorgehäuse 89 und die Modulaufnahme 81 im Wesentlichen gleiche Innenmaße aufweisen.

Anstelle von Durchbrechungen 27 können durch Energieabgabe der Bearbeitungslichtstrahlen auch anderweitige Funktionsbereiche auf einem Abschirmungselement 15 erzeugt werden, die sich hinsichtlich ihrer optischen Eigenschaften von den sie umgebenden Bereichen unterscheiden. Beispielsweise könnte als Abschirmungselement 15 eine transparente Platte mit einer aufgedampften Metallschicht bereitgestellt werden, wobei durch selektives Abtragen der Metallschicht transparente Bereiche als Blendenöffnungen 33 erzeugt werden. Alternativ könnte als Abschirmungselement 15 auch ein transparenter Träger mit einer aufgebrachten Fotolackschicht bereitgestellt werden, wobei durch selektives Aktivieren der Fotolackschicht und eine nachfolgende Lösungsmittelbehandlung transparente Bereiche als Blendenöffnungen 33 erzeugt werden. Eine weitere Alternative ist die Bereitstellung eines fotografischen Films als Abschirmungselement 15, wobei durch selektive Belichtung und gegebenenfalls nachfolgende Entwicklung des fotografischen Films transparente Bereiche als Blendenöffnungen 33 erzeugt werden.

Grundsätzlich ist es mittels eines erfindungsgemäßen Verfahrens auch möglich, anstelle von Blendenöffnungen 33 intransparente Bereiche auf einem transparenten Träger zu bilden und so Punktblenden oder Punktspiegel herzustellen. Außerdem können anstatt Linsen 13 auch andere optische Komponenten bereitgestellt werden, die in irgendeiner Form Lichtstrahlen ablenken, beispielsweise Objektive oder Spiegeloptiken.

Erfindungsgemäß hergestellte optische Systeme können nicht nur mit kollimierten Strahlenbündeln wie in den Figuren 3, 4 und 7 dargestellt, sondern auch mit konvergenten oder divergenten Strahlenbündeln arbeiten.

Die Erfindung ermöglicht die Herstellung von Blenden vielfältiger Art, die toleranzarm bezüglich der optischen Achsen von Linsen oder ähnlichen Optiken positioniert sind. Weiterhin unterstützt die Erfindung die Erstellung individueller Blendenformen und -größen. Besonders kommen die Prinzipien der Erfindung bei Mehrstrahlsensoren wie zum Beispiel Lichtgittern zum Tragen, weil alle Sendestrahlenbündel und alle Empfangssichtbereiche exakt zueinander ausgerichtet werden können, was insbesondere einen Simultanbetrieb aller Kanäle mit entsprechender Erhöhung der Schaltgeschwindigkeit erlaubt.

### Bezugszeichenliste:

- 11: Optikmodul
- 13: Linse
- 15: Abschirmungselement
- 17: Halterung
- 18: Linsenebene
- 19: Plattenebene
- 20: Brennebene
- 25: Bündel von Bearbeitungslichtstrahlen
- 27: Durchbrechung
- 30: optisches System
- 33: Blendenöffnung
- 35: optische Achse
- 36: Blendenelement
- 37, 37', 37": optoelektronischer Sensor
- 39: Lichtempfänger
- 41: Empfangslichtstrahlen
- 45: Empfangslichtbereich
- 49: Lichtsender
- 55: Sendelichtstrahlen
- 57: Parallelstrahlenbündel
- 58: Sendestrahlenbündel
- 66: Blendenelement
- 67: optoelektronischer Sensor
- 70: Schielwinkel
- 71: Optikmodul
- 80: Vorrichtung
- 81: Modulaufnahme
- 83: Modulausrichtungselement
- 85: Bearbeitungslaser
- 87: Positioniersystem
- 89: Sensorgehäuse

## Patentansprüche

1. Lichtgitter (37, 37', 37") mit wenigstens einem Lichtsender (49) oder Lichtempfänger (39) und wenigstens einem optischen System (30), das wenigstens ein Strahlablenkungselement (13), wenigstens ein Blendenelement (36) und wenigstens eine Halterung (17) zum Fixieren des Strahlablenkungselements (13) und des Blendenelements (36) in einer vorgegebenen Anordnung relativ zueinander umfasst,
**dadurch gekennzeichnet, dass**
das optische System (30) unter Einsatz eines Verfahrens hergestellt ist, bei dem
(i) das Strahlablenkungselement (13) und ein Abschirmungselement (15) bereitgestellt werden, wobei als Strahlablenkungselement (13) ein Linsenarray, eine Kombination eines Linsenarrays und einer Linse oder eine Kombination eines Linsenarrays und einer Spiegeloptik bereitgestellt wird,
(ii) das Strahlablenkungselement (13) und das Abschirmungselement (15) mittels der Halterung (17) derart fixiert werden, dass die tatsächliche Anordnung des Abschirmungselements (15) relativ zum Strahlablenkungselement (13) der vorgegebenen Anordnung des Blendenelements (36) relativ zum Strahlablenkungselement (13) entspricht, und
(iii) das Abschirmungselement (15) mittels Bearbeitungslichtstrahlen bearbeitet wird, um das Blendenelement (36) zu bilden, wobei
(iv) das Strahlablenkungselement (13) derart mit den Bearbeitungslichtstrahlen bestrahlt wird, dass die Bearbeitungslichtstrahlen nach einer Ablenkung durch das Strahlablenkungselement (13) auf einen Funktionsbereich des Abschirmungselements (15) auftreffen und dessen optische Eigenschaften durch Energieabgabe verändern.

2. Lichtgitter nach Anspruch 1,
**dadurch gekennzeichnet, dass**
im Schritt (i) als Strahlablenkungselement (13) eine Sammeloptik bereitgestellt wird.

3. Lichtgitter nach Anspruch 2,
**dadurch gekennzeichnet, dass**
im Schritt (ii) das Strahlablenkungselement (13) und das Abschirmungselement (15) mittels der Halterung (17) derart fixiert werden, dass das Abschirmungselement (15) zumindest näherungsweise in einer Brennebene (20) der Sammeloptik angeordnet ist.

4. Lichtgitter nach zumindest einem der vorstehenden Ansprüche,
**dadurch gekennzeichnet, dass**
im Schritt (ii) das Strahlablenkungselement (13) und das Abschirmungselement (15) mittels der, vorzugsweise einteiligen, Halterung (17) derart fixiert werden, dass sich eine feste Verbindung zwischen dem Strahlablenkungselement (13) und dem Abschirmungselement (15) ergibt und/oder dass
im Schritt (i) ein einstückiges Bauteil bereitgestellt wird, an dem das Abschirmungselement (15) und die Halterung (17) als Abschnitte ausgebildet sind.

5. Lichtgitter nach zumindest einem der vorstehenden Ansprüche,
**dadurch gekennzeichnet, dass**
die Bearbeitungslichtstrahlen durch ein Lasersystem (85) erzeugt werden und/oder dass
im Schritt (i) mehrere separate Strahlablenkungselemente (13) bereitgestellt werden, die im Schritt (ii) mittels einer gemeinsamen Halterung (17) fixiert werden.

6. Lichtgitter nach zumindest einem der vorstehenden Ansprüche,
**dadurch gekennzeichnet, dass**
im Schritt (i) ein zumindest im Wesentlichen intransparentes Ausgangselement (15) bereitgestellt wird und im Schritt (iv) durch die abgelenkten Bearbeitungslichtstrahlen eine Transparenz oder Teiltransparenz in dem Funktionsbereich (33) erzeugt wird.

7. Lichtgitter nach Anspruch 6,
**dadurch gekennzeichnet , dass**
im Schritt (iv) die Transparenz oder Teiltransparenz durch Abtragen von Material mittels der Bearbeitungslichtstrahlen erzeugt wird.

8. Lichtgitter nach Anspruch 7,
**dadurch gekennzeichnet , dass**
im Schritt (iv) die Transparenz oder Teiltransparenz durch Laserschneiden und/oder Laserbohren einer Durchbrechung (27) in dem Abschirmungselement (15) erzeugt wird, insbesondere wobei
im Schritt (i) als Abschirmungselement ein zumindest im Wesentlichen transparenter Träger mit einer aufgebrachten intransparenten Schicht, insbesondere Metallschicht, bereitgestellt wird und im Schritt (iv) die Transparenz oder Teiltransparenz durch wenigstens teilweises Abtragen der intransparenten Schicht erzeugt wird.

9. Lichtgitter nach Anspruch 8,
**dadurch gekennzeichnet, dass**
im Schritt (i) als Abschirmungselement ein zumindest im Wesentlichen transparenter Träger mit einer aufgebrachten Fotolackschicht bereitgestellt wird und im Schritt (iv) die Transparenz oder Teiltransparenz durch Aktivieren der Fotolackschicht und anschließende Entfernung der aktivierten Fotolackschicht mittels einer Lösungsmittelbehandlung erzeugt wird, insbesondere wobei
im Schritt (i) als Abschirmungselement ein fotografischer Film bereitgestellt wird und im Schritt (iv) die Transparenz oder Teiltransparenz durch Belichtung des fotografischen Films und gegebenenfalls anschließende Entwicklung des fotografischen Films erzeugt wird.

10. Lichtgitter nach zumindest einem der vorstehenden Ansprüche,
**dadurch gekennzeichnet, dass**
im Schritt (iii) das Bearbeiten des Abschirmungselements (15) durch eine Bilderfassungseinrichtung überwacht wird.

11. Lichtgitter nach zumindest einem der vorstehenden Ansprüche,
**dadurch gekennzeichnet, dass**
das Bearbeiten des Abschirmungselements (15) in einem teil- oder vollverbauten Zustand des optoelektronischen Sensors (37, 37', 37") durchgeführt wird und/oder dass
der Lichtsender (49) oder Lichtempfänger (39) während des Bearbeitens des Abschirmungselements (15) durch ein Schutzelement abgeschirmt wird und das Schutzelement entfernt wird, wenn das Bilden des Blendenelements (36) abgeschlossen ist und/oder dass
der Lichtsender (49) oder Lichtempfänger (39), oder ein mit dem Lichtsender (49) oder Lichtempfänger (39) verbundener Lichtleiter, unmittelbar am Funktionsbereich (33) des Abschirmungselements (15) angeordnet wird.

## Claims

1. A light grid (37, 37', 37") comprising at least one light transmitter (49) or light receiver (39) and at least one optical system (30) which comprises at least one beam deflection unit (13), at least one diaphragm element (36) and at least one holder (17) for fixing the beam deflection element (13) and the diaphragm element (36) in a predefined arrangement relative to one another,
**characterized in that**
the optical system (30) is manufactured using a method in which
(i) the beam deflection element (13) and a screening element (15) are provided, wherein a lens array, a combination of a lens array and a lens or a combination of a lens array and a mirror optics is provided as the beam deflection element (13);
(ii) the beam deflection element (13) and the screening element (15) are fixed by means of the holder (17) such that the actual arrangement of the screening element (15) relative to the beam deflection element (13) corresponds to the predefined arrangement of the diaphragm element (36) relative to the beam deflection element (13); and
(iii) the screening element (15) is processed by means of processing light beams to form the diaphragm element (36), wherein
(iv) the beam deflection element (13) is irradiated by the processing light beams such that, after a deflection by the beam deflection element (13), the processing light beams are incident on a functional zone of the screening element (15) and change its optical properties by energy emission.

2. A light grid in accordance with claim 1,
**characterized in that**
a converging optics is provided as the beam deflection element (13) in step (i).

3. A light grid in accordance with claim 2,
**characterized in that**
the beam deflection element (13) and the screening element (15) are fixed by means of the holder (17) in step (ii) such that the screening element (15) is at least approximately arranged in a focal plane (20) of the converging optics.

4. A light grid in accordance with at least one of the preceding claims, **characterized in that**
the beam deflection element (13) and the screening element (15) are fixed by means of the holder (17), preferably a one-part holder (17), in step (ii) such that a fixed connection results between the beam deflection element (13) and the screening element (15); and/or **in that** a single-piece component, at which the screening element (15) and the holder (17) are formed as sections, is provided in step (ii).

5. A light grid in accordance with at least one of the preceding claims, **characterized in that**
the processing light beams are produced by a laser system (85); and/or **in that**
a plurality of separate beam deflection elements (13) are provided in step (i) and are fixed by means of a common holder (17) in step (ii).

6. A light grid in accordance with at least one of the preceding claims, **characterized in that**
an at least substantially non-transparent starting element (15) is provided in step (i) and a transparency or partial transparency is produced in the functional zone (33) by the deflected processing light beams in step (iv).

7. A light grid in accordance with claim 6,
**characterized in that**
the transparency or partial transparency is produced by a removal of material by means of the processing light beams in step (iv).

8. A light grid in accordance with claim 7,
**characterized in that**
the transparency or partial transparency is produced in step (iv) by laser cutting and/or by laser drilling of an opening (27) in the screening element (15), in particular with
an at least substantially transparent carrier having an applied non-transparent layer, in particular a metal layer, being provided as the screening element in step (i) and the transparency or partial transparency being produced in step (iv) by an at least partial removal of the non-transparent layer.

9. A light grid in accordance with claim 8,
**characterized in that**
an at least substantially transparent carrier having an applied photoresist layer is provided as the screening element in step (i) and the transparency or partial transparency is produced in step (iv) by activation of the photoresist layer and a subsequent removal of the activated photoresist layer by means of a solvent treatment, in particular with a photographic film being provided as the screening element in step (i) and the transparency or partial transparency being produced in step (iv) by exposure of the photographic film and, if applicable, by a subsequent development of the photographic film.

10. A light grid in accordance with at least one of the preceding claims,
**characterized in that**
the processing of the screening element (15) is monitored by an image detection device in step (iii).

11. A light grid in accordance with at least one of the preceding claims,
**characterized in that**
the processing of the screening element (15) is carried out in a partially or fully installed state of the optoelectronic sensor (37, 37', 37"); and/or **in that** the light transmitter (49) or light receiver (39) is screened by a protective element during the processing of the screening element (15) and the protective element is removed when the forming of the diaphragm element (36) has been concluded; and/ or **in that**
the light transmitter (49) or the light receiver (39) or a light guide connected to the light transmitter (49) or light receiver (39) is arranged directly at the functional zone (33) of the screening element (15).

## Revendications

1. Grille lumineuse (37, 37', 37") comprenant au moins un émetteur de lumière (49) ou récepteur de lumière (39) et au moins un système optique (30) qui comprend au moins un élément de déviation de faisceau (13), au moins un élément à ouverture (36) et au moins un support (17) pour fixer l'élément de déviation de faisceau (13) et l'élément à ouverture (36) en un agencement prédéterminé l'un par rapport à l'autre,
**caractérisée en ce que**
le système optique (30) est réalisé par mise en œuvre d'un procédé dans lequel
(i) on fournit l'élément de déviation de faisceau (13) et un élément de blindage (15), l'élément de déviation de faisceau (13) étant fourni sous forme de réseau de lentilles, de combinaison d'un réseau de lentilles et d'une lentille ou de combinaison d'un réseau de lentilles et d'une optique à miroir,
(ii) l'élément de déviation de faisceau (13) et l'élément de blindage (15) sont fixés au moyen du support (17) de sorte que l'agencement réel de l'élément de blindage (15) par rapport à l'élément de déviation de faisceau (13) correspond à l'agencement prédéterminé de l'élément à ouverture (36) par rapport à l'élément de déviation de faisceau (13),
(iii) l'élément de blindage (15) est traité par des faisceaux lumineux de traitement pour former l'élément à ouverture (36), et
(iv) l'élément de déviation de faisceau (13) est irradié par les faisceaux lumineux de traitement de telle sorte que les faisceaux lumineux de traitement, après avoir été déviés par l'élément de déviation de faisceau (13), tombent sur une zone fonctionnelle de l'élément de blindage (15) et modifient ses propriétés optiques par dissipation d'énergie.

2. Grille lumineuse selon la revendication 1,
**caractérisée en ce que**
à l'étape (i), on fournit comme élément de déviation de faisceau (13) une optique de collecte.

3. Grille lumineuse selon la revendication 2,
**caractérisée en ce que**
à l'étape (ii), l'élément de déviation de faisceau (13) et l'élément de blindage (15) sont fixés au moyen du support (17) de telle sorte que l'élément de blindage (15) soit disposé au moins approximativement dans un plan focal (20) de l'optique de collecte.

4. Grille lumineuse selon l'une des revendications précédentes,
**caractérisée en ce que**
à l'étape (ii), l'élément de déviation de faisceau (13) et l'élément de blindage (15) sont fixés au moyen du support (17) réalisé de préférence d'un seul tenant, de telle sorte qu'il en résulte une connexion fixe entre l'élément de déviation de faisceau (13) et l'élément de blindage (15), et/ou **en ce que** à l'étape (i), on fournit un composant d'un seul tenant sur lequel l'élément de blindage (15) et le support (17) sont réalisés sous forme de portions.

5. Grille lumineuse selon l'une des revendications précédentes,
**caractérisée en ce que**
les faisceaux lumineux de traitement sont générés par un système laser (85), et/ou **en ce que**
à l'étape (i), on fournit plusieurs éléments de déviation de faisceau (13) séparés qui, à l'étape (ii), sont fixés au moyen d'un support commun (17).

6. Grille lumineuse selon l'une des revendications précédentes,
**caractérisée en ce que**
à l'étape (i), on fournit un élément de sortie (15) au moins sensiblement non transparent (15) et, à l'étape (iv), une transparence ou une transparence partielle est créée dans la zone fonctionnelle (33) par les faisceaux lumineux de traitement déviés.

7. Grille lumineuse selon la revendication 6,
**caractérisée en ce que**
à l'étape (iv), la transparence ou la transparence partielle est créée par enlèvement de matière au moyen des faisceaux lumineux de traitement.

8. Grille lumineuse selon la revendication 7,
**caractérisée en ce que**
à l'étape (iv), la transparence ou la transparence partielle est créée par découpage au laser et/ou par perçage au laser d'une percée (27) dans l'élément de blindage (15), et, en particulier,
à l'étape (i), on fournit comme élément de blindage un support au moins sensiblement transparent ayant une couche appliquée non transparente, en particulier une couche métallique, et, à l'étape (iv), la transparence ou la transparence partielle est créée par enlèvement au moins partiel de la couche non transparente.

9. Grille lumineuse selon la revendication 8,
**caractérisée en ce que**
à l'étape (i), on fournit comme élément de blindage un support au moins sensiblement transparent ayant une couche de résine photosensible appliquée, et, à l'étape (iv), la transparence ou la transparence partielle est créée par activation de la couche de résine photosensible, puis par enlèvement de la couche de résine photosensible activée au moyen d'un traitement par solvant, en particulier
à l'étape (i), on fournit comme élément de blindage un film photographique, et, à l'étape (iv), la transparence ou la transparence partielle est créée par exposition du film photographique, puis, le cas échéant, par développement du film photographique.

10. Grille lumineuse selon l'une au moins des revendications précédentes,
**caractérisée en ce que**
à l'étape (iii), le traitement de l'élément de blindage (15) est surveillé par un dispositif d'acquisition d'images.

11. Grille lumineuse selon l'une au moins des revendications précédentes,
**caractérisée en ce que**
le traitement de l'élément de blindage (15) est effectué dans un état partiellement ou complètement assemblé du capteur optoélectronique (37, 37', 37"), et/ou **en ce que**
l'émetteur de lumière (49) ou le récepteur de lumière (39) est protégé par un élément de protection pendant le traitement de l'élément de blindage (15), et l'élément de protection est enlevé lorsque la formation de l'élément à ouverture (36) est terminée, et/ou **en ce que**
l'émetteur de lumière (49) ou le récepteur de lumière (39) ou un guide de lumière relié à l'émetteur de lumière (49) ou au récepteur de lumière (39) est agencé directement sur la zone fonctionnelle (33) de l'élément de blindage (15).
